# EUROPÄISCHE PATENTANMELDUNG

(11) **EP 2 642 648 A1**
(43) Veröffentlichungstag der Anmeldung: **25.09.2013**
(21) Anmeldenummer: 12004046.4
(22) Anmeldetag: 24.05.2012
(51) Int. Cl.: H02K 55/00, F02M 21/00, F02C 7/22, F02M 31/00, F01D 15/10, F28D 21/00

(54) **Wärmekraftanlage mit gekühlter Supraleiterstruktur**

(30) Priorität: 23.03.2012 DE 102012005770
(71) Anmelder: Linde Aktiengesellschaft, 80331 München (DE)
(72) Erfinder: Eckl, Robert, Dr., 80339 München (DE); Ferstl, Johann, Dr., 80995 München (DE); Windmeier, Christoph, Dr., 82538 Geretsried (DE)
(74) Vertreter: Imhof, Dietmar

(57) **Zusammenfassung**

Es wird eine Wärmekraftanlage (10, 20, 30) mit einer Wärmekraftmaschine (2), die unter Verwendung eines tiefkalt verflüssigten Kohlenwasserstoffgemischs (1) befeuert werden kann, und mit einer elektrischen Einheit (3) mit einer Supraleiterstruktur (3b) vorgeschlagen, wobei eine Kühleinrichtung (3a) vorgesehen ist, die dazu ausgebildet ist, die Supraleiterstruktur (3b) unter Verwendung zumindest eines Teils des tiefkalt verflüssigten Kohlenwasserstoffgemischs (1) zu kühlen. Die Verwendung eines tiefkalt verflüssigten Kohlenwasserstoffgemischs (1) und ein Verfahren zur Erzeugung elektrischer Leistung sind ebenfalls Gegenstand der Erfindung.

## Beschreibung

Die Erfindung betrifft eine Wärmekraftanlage mit einer unter Verwendung eines tiefkalt verflüssigten Kohlenwasserstoffgemischs befeuerbaren Wärmekraftmaschine und einer elektrischen Einheit mit einer Supraleiterstruktur, die Verwendung eines tiefkalt verflüssigten Kohlenwasserstoffgemischs zur Kühlung einer derartigen Supraleiterstruktur sowie ein Verfahren zur Erzeugung elektrischer Leistung.

### Stand der Technik

Die Entwicklung von Komponenten mit Hochtemperatursupraleitern (HTS) in Form von Strombegrenzern, Transformatoren, Generatoren und Motoren mit individuellen Nennleistungen im mittleren MW-Bereich wird derzeit intensiv betrieben. Als potentielle Einsatzfelder derartiger elektrischer Komponenten werden insbesondere Lokomotiven- und Schiffsantriebe angesehen, die direkt von einer Verringerung des Bauraums und des Gewichts von Hochtemperatursupraleiterbauteilen profitieren.

In den vergangenen Jahrzehnten hat sich Erdgas weltweit als drittwichtigster Primärenergieträger nach Erdöl und Kohle etabliert. 2004 betrug der Anteil am weltweiten Primärenergiebedarf rund 21 %. Zahlreiche Studien prognostizieren Erdgas zukünftig ein deutliches Wachstum im Vergleich zu anderen Energieträgern.

Während im traditionellen Haupteinsatzsegment, dem Wärmemarkt, das weltweite Wachstum eher begrenzt ist, basiert der relative Bedeutungsgewinn von Erdgas insbesondere auf dem Trend zum zunehmenden Einsatz in der Erzeugung elektrischer Leistung. In diesem Sektor wird Erdgas insbesondere Kohle und Kernenergie ersetzen. Erdgas vereint dabei ökonomische und ökologische Vorzüge. Der weltweite Trend zu liberalisierten und zunehmend wettbewerblich organisierten Strommärkten führt zu einem wachsenden Bedarf an kleineren und flexibleren Kraftwerken, die überwiegend mit Gas befeuert werden.

Der Transport von Erdgas erfolgt zunehmend in flüssiger Form, weil es in diesem Aggregatzustand nur ein Sechshundertstel seines Ausgangsvolumens einnimmt. Die Erdgasverflüssigung erfolgt typischerweise in Onshoreanlagen mit einer Leistung von mehreren Megatonnen pro Jahr. Flüssigerdgas (Liquefied Natural Gas, LNG) ist das leichteste der üblicherweise eingesetzten verflüssigten Gase, die ferner sogenannte Natural Gas Liquids (NGL, überwiegend Ethan mit Anteilen von Propan) und Liquefied Petroleum Gas (LPG, überwiegend Propan mit signifikanten Anteilen Butan) umfassen.

LNG ist hinsichtlich seiner Komponenten nicht standardisiert, weist jedoch überwiegend Methan auf. Dieses definiert den Siedepunkt von LNG bei Atmosphärendruck von ca. -160 °C. LNG ist farb- und geruchlos und wird in der Regel vor der Verflüssigung aufgereinigt. Der niedrige Siedepunkt limitiert die Maximalkonzentrationen von Wasser, Kohlendioxid, Pentan und schwereren Kohlenwasserstoffen in LNG.

Der Wirkungsgrad herkömmlicher Generatoren in Wärmekraftanlagen, darunter auch jenen, die unter Verwendung von LNG befeuert werden, liegt je nach Typ und Baugröße zwischen 95 und 99%. In Kraftwerken zur Erzeugung elektrischer Leistung können damit 1 bis 5% der Verluste direkt dieser Komponente zugeordnet werden.

Es besteht der Bedarf nach Verbesserungen in der Effizienz derartiger Anlagen.

### Offenbarung der Erfindung

Vor diesem Hintergrund schlägt die Erfindung eine Wärmekraftanlage mit einer Wärmekraftmaschine, die unter Verwendung eines tiefkalt verflüssigten Kohlenwasserstoffgemischs befeuert werden kann, und mit einer elektrischen Einheit mit einer Supraleiterstruktur sowie die Verwendung eines tiefkalt verflüssigten Kohlenwasserstoffgemischs zur Kühlung einer derartigen Supraleiterstruktur und ein Verfahren zur Erzeugung elektrischer Leistung mit den Merkmalen der unabhängigen Patentansprüche vor. Bevorzugte Ausführungsformen sind in den Unteransprüchen angegeben und werden in der nachfolgenden Beschreibung erläutert.

### Vorteile der Erfindung

Die erfindungsgemäße Wärmekraftanlage umfasst eine Kühleinrichtung, die dazu ausgebildet ist, die Supraleiterstruktur unter Verwendung zumindest eines Teils des tiefkalt verflüssigten Kohlenwasserstoffgemischs zu kühlen. Insbesondere bei der Verwendung von Hochtemperatursupraleitern ergeben sich dabei mehrere Vorteile. Hochtemperatursupraleiter sind eine Klasse keramischer Supraleiter mit besonders hohen Sprungtemperaturen. Die Grenze zwischen Nieder- und Hochtemperatursupraleitern wird anwendungsorientiert bei einer Sprungtemperatur von 77 K (-196 °C, der Normalsiedetemperatur flüssigen Stickstoffs) gezogen. Kupferoxidhaltige Keramik-Hochtemperatursupraleiter (i.d.R. Perowskit-Derivate) erreichen Sprungtemperaturen bis zu 138 K (-135 °C), was oberhalb der oben angegebenen Siedetemperatur von LNG liegt. Ein entsprechender Hochtemperatursupraleiter lässt sich daher vorteilhafterweise mittels LNG kühlen.

Ist im Rahmen der Erfindung dabei von einem "tiefkalt verflüssigten Kohlenwasserstoffgemisch" die Rede, sei hierunter beispielsweise das in der Einleitung beschriebene LNG verstanden. Die Erfindung ist jedoch nicht auf LNG im engeren Sinne beschränkt sondern kann auch andere Kohlenwasserstoffgemische nutzen, die im verflüssigten Zustand eine zur Kühlung eines verwendeten Supraleiters ausreichende Temperatur aufweisen oder bei denen sich eine derartige Temperatur einstellen lässt. In der Regel wird es sich hierbei um methanreiche Kohlenwasserstoffgemische handeln, die aber auch signifikante Anteile von leichtsiedenden Komponenten (insbesondere Helium, Wasserstoff und Stickstoff) enthalten können.

Die spezifischen Vorteile von LNG können beispielsweise gegenüber Wasserstoff als einem weiteren theoretisch zur Feuerung und Kühlung verwendbaren verflüssigten Gas veranschaulicht werden.

So wird gegenüber Wasserstoff durch die Verwendung von LNG eine einfachere Materialauswahl von Ausrüstungsteilen ermöglicht, da keine Wasserstoffbeständigkeit erforderlich ist und die Materialien nur Temperaturen von ca. 90 K anstatt 20 K tolerieren müssen. Ähnliches gilt hinsichtlich der Temperaturen für die Kühlung mit Helium.

Wasserstoff weist in Kraftwerksprozessen einen weitaus schlechteren Gesamtwirkungsgrad auf als LNG. Der für die Verflüssigung von LNG erforderliche Verflüssigungsaufwand liegt bei nur ca. 10% des Brennwerts im Gegensatz zu 25% bei Wasserstoff. Gleichzeitig ist die spezifische Kälteleistung (Verdampfungsenthalpie) von LNG um etwa den Faktor 10 höher als jene von flüssigem Wasserstoff (8.9 gegenüber 0.9 kJ/mol). Das Kühlpotential von LNG ist damit deutlich höher.

Eine "Supraleiterstruktur" soll im Rahmen dieser Anmeldung eine Struktur oder ein Bauteil beschreiben, das einen entsprechenden Supraleiter aufweist. Diese kann beispielsweise als Spule mit einem Spulenkern und einer Wicklung, z.B. in Form eines Stators eines Generators, ausgebildet sein. Auch Leitungen in einer entsprechenden Anlage können als Supraleiterstrukturen ausgebildet sein und beispielsweise einen mit einem Kühlmittel durchfluteten Mantel aufweisen. Eine Supraleiterstruktur kann damit also entsprechende Kühlmittelspeicher oder -führungen aufweisen. Beispielsweise kann eine Generatorspule in einem Kühlmittelspeicher (Dewar) eingetaucht sein und ist dort vollständig mit dem Kühlmittel, im Rahmen dieser Anmeldung dem tiefkalt verflüssigten Kohlenwasserstoffgemisch, bedeckt.

Als Wärmekraftmaschine kann jede Maschine zum Einsatz kommen, die aus der Verbrennung von Kohlenwasserstoffen mechanische Leistung erzeugen kann. Insbesondere kann es sich hierbei um Heißgasmotoren, Gasmotoren, Gasturbinen, Dampfturbinen und/oder Gas-und-Dampf-Anlagen handeln.

Als elektrische Einheit kann beispielsweise ein Transformator, Generator und /oder entsprechende Leistungselektronik vorgesehen sein. Vorteilhafterweise handelt es sich bei der elektrischen Einheit um den durch die Wärmekraftmaschine mechanisch angetriebenen Generator.

Die Verluste von elektrischen Maschinen mit Hochtemperatursupraleitern beschränken sich im Wesentlichen auf die Kompensation des Wärmeeinfalls aus der Umgebung (also die entsprechende Aufrechterhaltung der Kühlung) sowie die Reibungsverluste der rotierenden Bauteile. Im Vergleich zu konventionellen Maschinen lassen sich durch den Einsatz von Hochtemperatursupraleitern die Verluste entsprechender Maschinen zumindest halbieren. Eine erfindungsgemäße Wärmekraftanlage weist daher einen besonders hohen Wirkungsgrad auf.

Die Baugröße und das Gewicht der Generatoren kann hierdurch verringert werden, was zu einer Kostenersparnis führt. Insgesamt ergibt sich eine erhebliche Reduktion des elektrischen Energieverbrauchs über reduzierte Stromwärmeverluste.

Durch die zusätzliche Verwendung des in der Wärmekraftanlage verfeuerten Brennstoffs, eines tiefkalt verflüssigten Kohlenwasserstoffgemischs, zur Kühlung von Supraleiterstrukturen in einer elektrischen Einheit lassen sich Synergieeffekte erzielen. Auf die separate Bereitstellung eines Kältemittels wie flüssigem Helium (für reguläre Supraleiter) oder Neon/Stickstoff (für Hochtemperatursupraleiter) kann damit verzichtet werden. Dies ist insbesondere in Regionen von Vorteil, in denen die Versorgung mit entsprechenden Medien nicht kontinuierlich sichergestellt werden kann. Das verdampfte Kältemittel bleibt nicht ungenutzt sondern kann in energetisch sinnvoller Weise verwendet werden. Entsprechende Anlagen sind baulich einfacher umzusetzen und erfordern keinen zusätzlichen apparativen Aufwand.

Wie mehrfach erwähnt, handelt es sich bei LNG, aber auch bei anderen verwendbaren tiefkalt verflüssigten Kohlenwasserstoffgemischen, typischerweise nicht um standardisierte Produkte. Die Siedepunkte können daher in gewissem Umfang schwanken.

Auch werden, anders als es die oben angegebenen Sprungtemperaturen vermuten lassen, Hochtemperatursupraleiter bei Leistungsanwendungen häufig bei Temperaturen unterhalb ihrer Sprungtemperatur betrieben. Grund ist die gegenseitige Abhängigkeit der möglichen Transportströme, der kritischen Feldstärke und der Temperatur. Die Leistungsdaten der Hochtemperatursupraleiter können daher durch eine Absenkung der Temperatur verbessert werden.

Auch kann es, beispielsweise aus Kostengründen, erforderlich oder wünschenswert sein, Hochtemperatursupraleiter zu verwenden, deren Sprungtemperatur oberhalb der Siedetemperatur des tiefkalt verflüssigten Kohlenwässerstoffgemischs liegt.

Insbesondere in den genannten Fällen ist eine Wärmekraftanlage vorteilhaft, die Vakuummittel aufweist, die dazu ausgebildet sind, das tiefkalt verflüssigte Kohlenwasserstoffgemisch mit verringertem Druck in die Kühleinrichtung einzuspeisen. Der Siedepunkt des verflüssigten Kohlenwasserstoffgemischs verringert sich hierdurch, so dass geringere Temperaturen zur Kühlung der Supraleiterstruktur zur Verfügung stehen.

Hierzu umfassen die Vakuummittel vorteilhafterweise eine in einer Zuleitung für das tiefkalt verflüssigte Kohlenwasserstoffgemisch vorgesehene Drosselvorrichtung und einen stromab der Drossevorrichtung angeordneten Vakuumkompressor. Zwischen Drosselvorrichtung und Vakuumkompressor wird eine Zone niedrigeren Drucks (Niederdruckbereich) geschaffen, aus der das tiefkalt verflüssigte Kohlenwasserstoffgemisch zur Einspeisung in die Kühleinrichtung entnommen werden kann. Vorteilhafterweise sind der Vakuumkompressor und/oder die Drosselvorrichtung regelbar ausgebildet, so dass eine definierte Siedetemperatur des das tiefkalt verflüssigten Kohlenwasserstoffgemischs in der Zone niedrigeren Drucks eingestellt werden kann.

Da die Druckverringerung durch die Vakuummittel einen teilweisen Übergang des tiefkalt verflüssigten Kohlenwasserstoffgemischs in die Gasphase bewirkt, ist vorteilhafterweise zwischen der Drosselvorrichtung und dem Vakuumkompressor ein Abscheider angeordnet, dem das tiefkalt verflüssigte Kohlenwasserstoffgemisch zur Einspeisung in die Kühleinrichtung bodenseitig entnommen werden kann. Hierdurch wird sichergestellt, dass nur flüssiges Kühlmittel in die Kühleinrichtung eingespeist wird.

Der Vakuumkompressor kann vorteilhafterweise als Dampfstrahlkompressor ausgebildet sein und mit einem stromauf der Drosselvorrichtung abgezweigten und verdampften Anteil des tiefkalt verflüssigten Kohlenwasserstoffgemischs als Treibgas betrieben werden. Hierdurch lässt sich weitere Energie einsparen, weil ein entsprechender Dampfstrahlkompressor keine externe Zufuhr von Arbeit benötigt. Ein Dampfstrahl-kompressor weist keine mechanisch anfälligen Komponenten auf und kann daher weitgehend wartungsfrei betrieben werden.

Besonders vorteilhaft ist es, das Treibgas durch Verdampfung des Anteils des tiefkalt verflüssigten Kohlenwasserstoffgemischs mittels Abwärme der Wärmekraftmaschine zu erzeugen. Hierdurch lassen sich die Verluste einer entsprechenden Anlage weiter verringern, indem die Abwärme sinnvoll genutzt wird. Zur Ausnutzung der Abwärme können übliche Abwärmeverdampfer zum Einsatz kommen.

Die Kühleinrichtung ist vorteilhafterweise vollständig in den Gaskreislauf, genauer in den Niederdruckbereich, integriert, wobei zumindest teilweise verdampftes, zuvor tiefkalt verflüssigtes Kohlenwasserstoffgemisch dem Vakuumkompressor saugseitig zugeführt werden kann. Wie erläutert, umfassen Supraleiterstrukturen beispielsweise Kühlbehälter, in denen die entsprechenden Hochtemperatursupraleiter eingetaucht sind. Abdampfendes Kühlmittel kann dabei kontinuierlich abgezogen und in der Wärmekraftmaschine verfeuert werden.

Die Wärmekraftanlage kann insgesamt dazu eingerichtet sein, verdampftes, zuvor tiefkalt verflüssigtes Kohlenwasserstoffgemisch in der Wärmekraftmaschine zu verfeuern und/oder in ein externes Leitungssystem einzuspeisen. Übersteigen dabei die bei der Kühlung in die Gasphase übergehenden Anteile des tiefkalt verflüssigten Kohlenwasserstoffgemischs den Bedarf der Wärmekraftmaschine, oder ist diese z. B. zeitweise abgeschaltet, können Überschüsse ohne Verluste in ein entsprechendes Leitungsnetz (z.B. zur Versorgung von Verbrauchern) eingespeist werden.

Eine entsprechende Wärmekraftanlage kann eine Kühleinrichtung aufweisen, die dazu ausgebildet ist, einen direkten Kontakt zwischen der Supraleiterstruktur und dem tiefkalt verflüssigten Kohlenwasserstoffgemisch herzustellen. Dies wurde bereits zuvor erläutert. Der Wärmetausch zwischen dem Hochtemperatursupraleiter und dem tiefkalt verflüssigten Kohlenwasserstoffgemisch kann z.B. durch Kanäle im Eisenkern oder in Wicklungen oder in einem Tauchbad erfolgen. Es kann ein direkter Kontakt zwischen dem Hochtemperatursupraleiter und dem tiefkalt verflüssigten Kohlenwasserstoffgemisch bestehen oder es können Wärmeüberträgermaterialien vorgesehen sein.

In anderen Szenarien kann auch eine Wärmetransfereinrichtung vorgesehen sein, die dazu ausgebildet ist, einen Wärmetausch zwischen der Kühleinrichtung und der Supraleiterstruktur vorzunehmen. So kann beispielsweise ein zusätzlicher Kühlkreislauf (z.B. mit Helium oder Stickstoff) als Kältemittel vorgesehen sein. Hierbei findet zunächst ein Wärmetausch zwischen dem tiefkalt verflüssigten Kohlenwasserstoffgemisch und dem Kühlmittel des zusätzlichen Kühlkreislaufs und anschließend ein Wärmetausch zwischen dem Kühlmittel des zusätzlichen Kühlkreislaufs und der Supraleiterstruktur statt. Auf diese Weise kann, wenn der zusätzliche Kühlkreislauf eine weitere Abkühlung erlaubt, die Supraleiterstruktur auf noch tiefere Temperaturen gekühlt werden. Der zusätzliche Kühlkreislauf kann z.B. weitere Kompressoren und Wärmetauscher aufweisen. Dies ermöglicht den Einsatz von Hochtemperatursupraleitern mit niedrigeren Sprungtemperaturen.

Wie bereits mehrfach erläutert, kann eine Wärmekraftanlage vorteilhafterweise LNG als verflüssigtes Kohlenwasserstoffgemisch verwenden. Hierdurch lassen sich die eingangs erwähnten Vorteile dieses Energieträgers nutzen.

Die entsprechende Verwendung eines tiefkalt verflüssigten Kohlenwasserstoffgemischs, insbesondere von LNG, zur Kühlung einer Supraleiterstruktur eines Generators einer zuvor erläuterten Wärmekraftanlage ist ebenfalls Gegenstand der Erfindung. Zu den Vorteilen sei auf die entsprechenden Erläuterungen verwiesen.

Ein erfindungsgemäß ebenfalls vorgesehenes Verfahren zur Erzeugung elektrischer Leistung umfasst, eine Wärmekraftmaschine einer zuvor erläuterten Wärmekraftanlage unter Verwendung eines tiefkalt verflüssigten Kohlenwasserstoffgemischs zu befeuern, wobei eine Supraleiterstruktur einer elektrischen Einheit der Wärmekraftanlage, insbesondere eines Generators, mittels einer Kühleinrichtung unter Verwendung zumindest eines Teils des tiefkalt verflüssigten Kohlenwasserstoffgemischs zu kühlen. Auch hier sei auf die obigen Ausführungen verwiesen.

Wie erläutert, ist es zur Erreichung niedrigerer Temperaturen besonders vorteilhaft, den Druck des tiefkalt verflüssigten Kohlenwasserstoffgemischs vor der Verwendung zur Kühlung mittels der Kühleinrichtung von einem ersten Druckwert auf einen zweiten Druckwert zu verringern. Der erste Druckwert liegt dabei vorteilhafterweise im Bereich von 1 bis 16 bar, den in (Druck-)Tanks üblichen Drücken. Entsprechende Druckwerte können beispielsweise 1, 2, 4, 6, 8, 10, 12, 14 oder 16 bar betragen. Der zweite Druckwert liegt in einem Bereich von etwa 1 bis 200 mbar. Entsprechende Druckwerte können beispielsweise 1, 5, 10, 20, 50, 100, 150 oder 200 mbar betragen. Die Siedetemperatur des tiefkalt verflüssigten Kohlenwasserstoffgemischs kann hierbei von etwa -110 bis -167 °C auf -160 bis -184 C° verringert werden.

Die Erfindung wird nachfolgend unter Bezugnahme auf die beigefügten Zeichnungen weiter erläutert, welche bevorzugte Ausführungsformen zeigen.

### Kurze Beschreibung der Zeichnungen

Figur 1 zeigt eine Wärmekraftanlage gemäß einer Ausführungsform der Erfindung in schematischer Darstellung.
Figur 2 zeigt eine Wärmekraftanlage gemäß einer weiteren Ausführungsform der Erfindung in schematischer Darstellung.
Figur 3 zeigt eine Wärmekraftanlage gemäß einer weiteren Ausführungsform der Erfindung in schematischer Darstellung.

### Ausführungsformen der Erfindung

Die Figuren zeigen Ausführungsformen der Erfindung, wobei gleiche oder gleichwirkende Elemente mit identischen Bezugszeichen angegeben sind. Auf eine wiederholte Erläuterung wird der Übersichtlichkeit halber verzichtet.

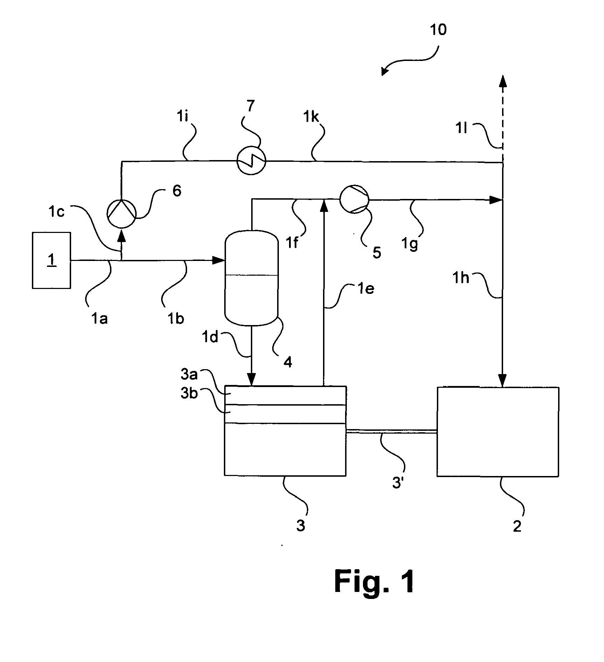

Figur 1 zeigt eine Wärmekraftanlage 10 gemäß einer Ausführungsform der Erfindung. Diese weist eine Wärmekraftmaschine 2 und eine elektrische Einheit, hier als Generator 3 veranschaulicht, auf. Eine zu kühlende elektrische Einheit kann neben einem Generator 3 z.B. auch einen Transformator und /oder Leistungselektronik umfassen.

Der Wärmekraftanlage 10 wird über eine Leitung 1 a ein tiefkalt verflüssigtes Kohlenwasserstoffgemisch 1 zugeführt. Dieses wird in Teilströme aufgeteilt, deren Verhältnis sich nach dem jeweiligen Bedarf zur Kühlung und Verfeuerung richtet.

Über Leitung 1 b wird das tiefkalt verflüssigte Kohlenwasserstoffgemisch 1 einem Abscheider 4 zugeführt. Dieser stellt sicher, dass zur Kühlung nur flüssiges Kühlmittel verwendet wird. Vom Boden des Abscheiders 4 wird über Leitung 1 d das tiefkalt verflüssigte Kohlenwasserstoffgemisch 1 abgezogen und einer Kühleinrichtung 3a des Generators 3 zugeführt. Dort gelangt es in Kontakt mit einer Supraleiterstruktur 3b und kann diese kühlen. Der Generator 3 ist über eine mechanische Verbundung 3', z.B. eine Generatorwelle, an die Wärmekraftmaschine 2 angebunden.

Ein verdampfter Anteil des zuvor verflüssigten Kohlenwasserstoffgemischs 1 wird über Leitung 1 e abgezogen. Ebenso wird ein verdampfter Anteil des zuvor verflüssigten Kohlenwasserstoffgemischs 1 (sogenanntes Flashgas) vom Kopf des Abscheiders 4 über Leitung 1f abgezogen. Die Gasströme aus den Leitungen 1e und 1f werden mittels eines Kompressors 5 verdichtet und über Leitungen 1g und 1 h der Wärmekraftmaschine 2 zugeführt und dort verfeuert. Überschüssige Anteile können über eine Leitung 1 h an ein Leitungsnetz 1l an Endverbraucher abgegeben werden.

Ein zweiter Teilstrom des über Leitung 1a bereitgestellten tiefkalt verflüssigten Kohlenwasserstoffgemischs 1 wird mittels einer Pumpe 6 über Leitung 1 i einem Verdampfer 7 zugeführt. Das verdampfte, zuvor tiefkalt verflüssigte Kohlenwasserstoffgemisch 1 gelangt über Leitung 1 k, wie zuvor hinsichtlich des verdampften Anteils des zuvor verflüssigten Kohlenwasserstoffgemischs 1 aus Leitung 1g erläutert, entweder zur Wärmekraftmaschine 2 oder in Leitungsnetz 1I.

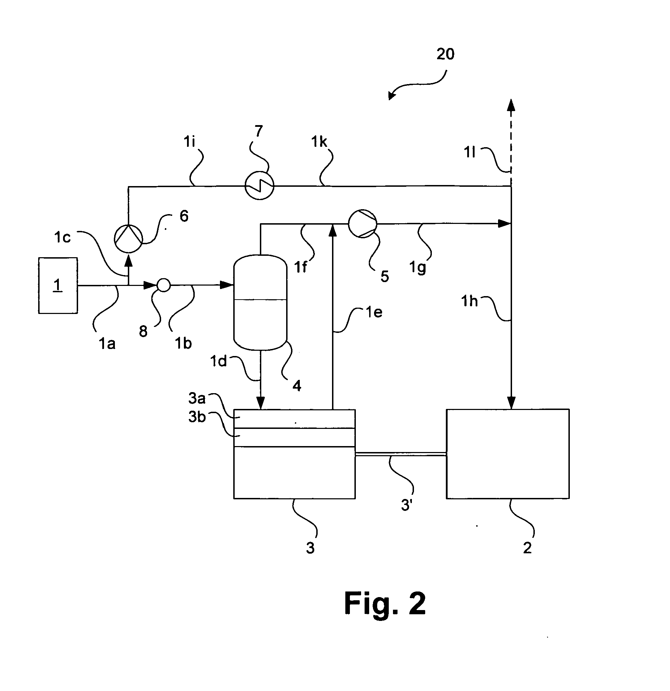

Figur 2 zeigt eine Wärmekraftanlage 20 gemäß einer weiteren Ausführungsform der Erfindung. Die Wärmekraftanlage 20 weist zusätzlich Vakuummittel auf.

Hierbei ist der Kompressor 5 als Vakuumkompressor 5 ausgebildet. Im Zusammenwirken mit einer Drosselvorrichtung 8 kann hierdurch in den Leitungen 1 b, 1d, 1e und 1f ein Unterdruck erzeugt werden, der, wie zuvor erläutert, den Siedepunkt des tiefkalt verflüssigten Kohlenwasserstoffgemischs verringert und damit geringere Temperaturen zur Kühlung in der Kühleinrichtung 3a ermöglicht. Sowohl der Vakuumkompressor 5 als auch die Drosselvorrichtung 8 können mit entsprechenden Regelmitteln versehen sein, die eine Temperatur- und Durchflusseinstellung erlauben.

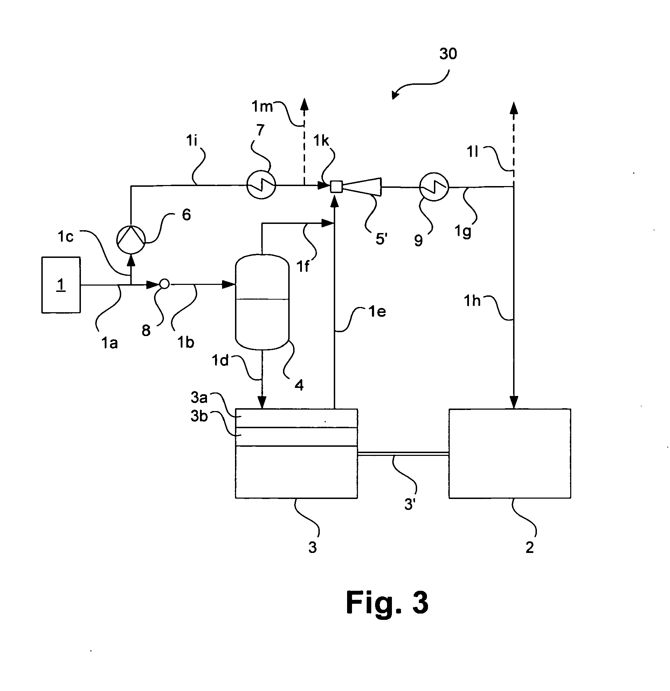

Figur 3 zeigt eine Wärmekraftanlage 30 gemäß einer weiteren Ausführungsform der Erfindung. Bei der Wärmekraftanlage 30 ist der Vakuumkompressor 5 als Dampfstrahl-kompressor 5' ausgebildet.

Dampfstrahhlkompressoren 5', auch als Strahlverdichter bezeichnet, sind grundsätzlich bekannt. Sie werden mit einem sogenannten Treibgas betrieben, das dem Dampfstrahlkompressor 5' (hier über Leitung 1 i) unter Druck zugeführt wird und das in einer Vakuumleitung (hier in Leitungen 1e und 1f) einen Unterdruck erzeugt. Zur Erzeugung des Treibgases wird der Verdampfer 7 entsprechend betrieben. Vorteilhafterweise wird hierzu Abwärme der Wärmekraftmaschine 2 verwendet. Da die Expansion in dem Dampfstrahlkompressor 5' eine Abkühlung bewirken kann, ist optional ein Heizer 9 vorgesehen.

### Bezugszeichenliste

- 10: Wärmekraftanlage
- 20: Wärmekraftanlage
- 30: Wärmekraftanlage
- 1: tiefkalt verflüssigtes Kohlenwasserstoffgemisch
- 1 a-I: Leitungen
- 2: Wärmekraftmaschine
- 3: Generator
- 3': mechanische Verbindung
- 3a: Kühleinrichtung
- 3b: Supraleiterstruktur
- 3c: Wärmetransfereinrichtung
- 4: Abscheider
- 5: (Vakuum-)Kompressor
- 5': Dampfstrahl-Kompressor
- 6: Pumpe
- 7: Verdampfer
- 8: Drossel
- 9: Heizer

## Patentansprüche

1. Wärmekraftanlage (10, 20, 30) mit einer Wärmekraftmaschine (2), die unter Verwendung eines tiefkalt verflüssigten Kohlenwasserstoffgemischs (1) befeuert werden kann, und mit einer elektrischen Einheit (3) mit einer Supraleiterstruktur (3b), wobei eine Kühleinrichtung (3a) vorgesehen ist, die dazu ausgebildet ist, die Supraleiterstruktur (3b) unter Verwendung zumindest eines Teils des tiefkalt verflüssigten Kohlenwasserstoffgemischs (1) zu kühlen.

2. Wärmekraftanlage (10, 20, 30) nach Anspruch 1, die Vakuummittel (4, 5, 5', 8) aufweist, die dazu ausgebildet sind, das tiefkalt verflüssigte Kohlenwasserstoffgemisch (1) mit verringertem Druck zur Einspeisung in die Kühleinrichtung (3a) bereitzustellen.

3. Wärmekraftanlage (10, 20, 30) nach Anspruch 2, bei der die Vakuummittel (4, 5, 5', 8) eine in einer Zuleitung (1 a) für das tiefkalt verflüssigte Kohlenwasserstoffgemisch (1) vorgesehene Drossel (8) und einen stromab der Drossel angeordneten Vakuumkompressor (5, 5') umfassen, wobei das tiefkalt verflüssigte Kohlenwasserstoffgemisch (1) zwischen der Drossel (8) und dem Vakuumkompressor (5,5') zur Einspeisung in die Kühleinrichtung (3a) mit verringertem Druck entnommen werden kann.

4. Wärmekraftanlage (10, 20, 30) nach Anspruch 3, bei der die Vakuummittel (4, 5, 5', 8) einen zwischen der Drossel (8) und dem Vakuumkompressor (5, 5') angeordneten Abscheider (4) umfassen, dem das tiefkalt verflüssigte Kohlenwasserstoffgemisch (1) zur Einspeisung in die Kühleinrichtung (3a) bodenseitig entnommen werden kann.

5. Wärmekraftanlage (10, 20, 30) nach Anspruch 3 oder 4, bei der der Vakuumkompressor (5, 5') als Dampfstrahlkompressor (5') ausgebildet ist, der mit einem stromauf der Drossel (8) abgezweigten und verdampften Anteil des tiefkalt verflüssigten Kohlenwasserstoffgemischs (1) als Treibgas betrieben werden kann.

6. Wärmekraftanlage (10, 20, 30) nach Anspruch 5, bei dem das Treibgas durch Verdampfung des Anteils des tiefkalt verflüssigten Kohlenwasserstoffgemischs (1) mittels Abwärme der Wärmekraftmaschine (2) erzeugt wird.

7. Wärmekraftanlage (10, 20, 30) nach einem der Ansprüche 3 bis 6, bei dem in der Kühleinrichtung (3a) zumindest teilweise verdampftes, zuvor tiefkalt verflüssigtes Kohlenwasserstoffgemisch (1) dem Vakuumkompressor (5, 5') saugseitig zugeführt werden kann.

8. Wärmekraftanlage (10, 20, 30) nach einem der vorstehenden Ansprüche, bei der verdampftes, zuvor tiefkalt verflüssigtes Kohlenwasserstoffgemisch (1) in der Wärmekraftmaschine (2) verfeuert und/oder in ein Leitungssystem (1l, 1 m) eingespeist werden kann.

9. Wärmekraftanlage (10, 20, 30) nach einem der vorstehenden Ansprüche, wobei die Kühleinrichtung (3a) dazu ausgebildet ist, einen direkten Kontakt zwischen der Supraleiterstruktur (3b) und dem tiefkalt verflüssigten Kohlenwasserstoffgemisch (1) herzustellen.

10. Wärmekraftanlage (10, 20, 30) nach einem der Ansprüche 1 bis 8, wobei eine Wärmetransfereinrichtung (3c) vorgesehen ist, die dazu ausgebildet ist, einen Wärmetausch zwischen der Kühleinrichtung (3a) und der Supraleiterstruktur (3b) vorzunehmen.

11. Wärmekraftanlage (10, 20, 30) nach einem der vorstehenden Ansprüche, die dazu ausgebildet ist, Flüssigerdgas als das verflüssigte Kohlenwasserstoffgemisch (1) zu verwenden.

12. Verwendung eines tiefkalt verflüssigten Kohlenwasserstoffgemischs (1), insbesondere von Flüssigerdgas, zur Kühlung einer Supraleiterstruktur (3b) eines Generators (3) einer Wärmekraftanlage (10, 20, 30) nach einem der vorstehenden Ansprüche.

13. Verfahren zur Erzeugung elektrischer Leistung, das umfasst, eine Wärmekraftmaschine (2) einer Wärmekraftanlage (10, 20, 30) gemäß einem der Ansprüche 1 bis 11 unter Verwendung eines tiefkalt verflüssigten Kohlenwasserstoffgemischs (1) zu befeuern, wobei eine Supraleiterstruktur (3b) einer elektrischen Einheit (3) der Wärmekraftanlage (10, 20, 30) mittels einer Kühleinrichtung (3a) unter Verwendung zumindest eines Teils des tiefkalt verflüssigten Kohlenwasserstoffgemischs (1) gekühlt wird.

14. Verfahren nach Anspruch 13, wobei ein Druck des tiefkalt verflüssigten Kohlenwasserstoffgemischs (1) vor der Verwendung zur Kühlung mittels einer Kühleinrichtung (3a) von einem ersten Druckwert auf einen zweiten Druckwert verringert wird.

15. Verfahren nach Anspruch 14, wobei der erste Druckwert 1 bis 16 bar und der zweite Druckwert 1 bis 200 mbar beträgt und/oder eine Siedetemperatur des tiefkalt verflüssigten Kohlenwasserstoffgemischs (1) bei dem ersten Druckwert -110 bis -167 °C und bei dem zweiten Druckwert -160 bis -184 °C beträgt.
